# EUROPEAN PATENT APPLICATION

(11) **EP 4 528 836 A1**
(43) Date of publication of application: **26.03.2025**
(21) Application number: 24179965.9
(22) Date of filing: 04.06.2024
(51) Int. Cl.: H01M 4/04, H01M 4/133, H01M 4/1393, H01M 4/36, H01M 4/38, H01M 4/587, H01M 4/62, H01M 4/66, H01M 10/0525, H01M 10/0562, H01M 10/0566, H01M 4/02

(54) **ANODE FOR LITHIUM METAL BATTERY, METHOD OF PREPARING THE SAME, AND LITHIUM METAL BATTERY INCLUDING THE ANODE**

(30) Priority: 20.09.2023 KR 20230125843
(71) Applicant: Samsung SDI Co., Ltd., Yongin-si, Gyeonggi-do 17084 (KR); Seoul National University R&DB Foundation, Seoul 08826 (KR)
(72) Inventor: Kim, Heemin, 17084 Yongin-si, Gyeonggi-do (KR); Lee, Kanghee, 17084 Yongin-si, Gyeonggi-do (KR); Bae, Woojin, 17084 Yongin-si, Gyeonggi-do (KR); Moon, Jongseok, 17084 Yongin-si, Gyeonggi-do (KR); Woo, Hyunsik, 17084 Yongin-si, Gyeonggi-do (KR); Park, Jongseok, 17084 Yongin-si, Gyeonggi-do (KR); Park, Jinhwan, 17084 Yongin-si, Gyeonggi-do (KR); Choi, Jangwook, 06737 Seoul (KR); Park, Gyuleen, 08831 Seoul (KR); Kim, Sujin, 08787 Seoul (KR); Bae, Sangjin, 17084 Yongin-si, Gyeonggi-do (KR); Kim, Jisub, 08826 Seoul (KR)
(74) Representative: Michalski Hüttermann & Partner Patentanwälte mbB

(57) **Abstract**

Provided are an anode for a lithium metal battery, a lithium metal battery including the same, and a method of preparing the anode, the anode including a current collector, a host layer on the anode current collector and including mesocarbon microbeads (MCMBs), a first MCMB-containing layer including MCMBs and a first lithium-ion conducting polymer, and a second MCMB-containing layer including MCMBs and a second lithium-ion conducting polymer, wherein the first lithium-ion conducting polymer and the second lithium-ion conducting polymer each have an electrical conductivity of 10⁻⁸ S/m or less, an amount of the second lithium-ion conducting polymer is greater than that of the first lithium-ion conducting polymer, and the concentration of MCMBs in the second MCMB-containing layer is different from the concentration of MCMBs in the first MCMB-containing layer.

## Description

### CROSS-REFERENCE TO RELATED APPLICATION

The present application claims priority to and the benefit of Korean Patent Application No. 10-2023-0125843, filed on September 20, 2023, in the Korean Intellectual Property Office, the entire content of which is hereby incorporated by reference.

### BACKGROUND

### 1. Field

One or more embodiments of the present disclosure relate to an anode for a lithium metal battery, a method of preparing the same, and a lithium metal battery including the anode.

### 2. Description of the Related Art

Lithium-ion batteries currently on the market mainly use carbon-based anode active materials such as graphite. Such carbon-based anode active materials have high stability in lithium-ion batteries because there is no or substantially no change in volume during charging and discharging. However, because their capacity is small, anode active materials having higher capacity would provide a benefit.

As an anode active material, lithium metal having a much higher theoretical capacity than that of carbon-based anode active materials may be used.

Side reactions between lithium metal and an electrolyte during charging and discharging give rise to the formation of dendrites on the surface of the lithium metal, and the growth of dendrites causes a short circuit between a cathode and an anode, which may cause degradation in lifespan characteristics of a lithium metal battery including lithium metal.

Thus, there is a desire to improve the lifespan characteristics of a lithium metal battery including lithium metal.

### SUMMARY

One or more embodiments of the present disclosure include an anode for a lithium metal battery capable of controlling a volume change of a lithium metal during charging and discharging.

One or more embodiments include a lithium metal battery having improved Coulomb efficiency by including the anode.

One or more embodiments include a method of preparing the anode.

Additional aspects of embodiments will be set forth in part in the description which follows and, in part, will be apparent from the description, or may be learned by practice of the presented embodiments of the present disclosure.

According to one or more embodiments, a lithium metal battery includes:
an anode current collector,
a host layer on the anode current collector and including mesocarbon microbeads (MCMBs),
a first MCMB-containing layer including MCMBs and a first lithium-ion conducting polymer, and
a second MCMB-containing layer including MCMBs and a second lithium-ion conducting polymer, an electrical conductivity of each of the first lithium-ion conducting polymer and the second lithium-ion conducting polymer may be 10⁻⁸ S/m or less, and the amount of the second lithium-ion conducting polymer may be greater than that of the first lithium-ion conducting polymer, and the concentration of MCMBs in the second MCMB-containing layer is different from the concentration of MCMBs in the first MCMB-containing layer.

According to one or more embodiments, a lithium metal battery includes a cathode,
the anode, and
an electrolyte between the cathode and the anode.

According to one or more embodiments, a method of preparing the anode comprises preparing an anode current collector,
forming a host layer on the anode current collector,
electrojetting a composition including MCMBs and a first lithium-ion conducting polymer, and
electrojetting a composition including MCMBs and a second lithium-ion conducting polymer, followed by drying,
wherein the electrical conductivity of each of the first lithium-ion conducting polymer and the second lithium-ion conducting polymer may be 10⁻⁸ S/m or less, and
the amount of the second lithium-ion conducting polymer may be adjusted to be greater than that of the first lithium-ion conducting polymer, so as to prepare the anode.

The electrojetting may include electrospinning and/or electrospraying.

### BRIEF DESCRIPTION OF THE DRAWINGS

The above and other aspects and features of certain embodiments of the present disclosure will be more apparent from the following description taken in conjunction with the accompanying drawings, in which:
FIG. 1A is a scanning electron microscopy image showing the formation of a lithium electrodeposition layer on an anode for a lithium metal battery of Example 1;
FIG. 1B is a scanning electron microscopy image showing the formation of a lithium electrodeposition layer on an anode for a lithium metal battery of Comparative Example 1;
FIG. 2 is a capacity-voltage graph for lithium metal batteries of Example 1 and Comparative Example 1;
FIG. 3 is a schematic diagram of a lithium metal battery according to embodiments;
FIG. 4 is a schematic diagram of a lithium metal battery according to other embodiments;
FIG. 5 is a schematic diagram of a lithium metal battery according to other embodiments; and
FIG. 6 is a schematic diagram of a lithium metal battery according to other embodiments.

### DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," when preceding a list of elements, modify the entire list of elements and do not modify the individual elements of the list.

The subject matter of the present disclosure described hereinbelow may have various modifications and various embodiments, and thus, example embodiments will be illustrated in the drawings and more fully described. The subject matter of the present disclosure, however, should not be construed as limited to the example embodiments set forth herein, and rather, should be understood as covering all modifications, equivalents, or alternatives falling within the scope of the present disclosure.

The terms used herein are for the purpose of describing particular embodiments only, and are not intended to be limiting the present disclosure. An expression used in the singular encompasses the expression of the plural, unless it has a clearly different meaning in the context. It will be further understood that the terms "comprises" and/or "comprising," or "includes" and/or "including" when used in this specification, specify the presence of the stated features, regions, integers, steps, operations, elements, and/or components, but do not preclude the presence or addition of one or more other features, regions, integers, steps, operations, elements, components, and/or groups thereof. The sign "/" used herein may be interpreted as "and", or as "or" depending on the context.

In the drawings, thicknesses may be magnified and/or exaggerated to clearly illustrate various layers and regions. Like reference numbers may refer to like elements throughout the drawings and the following description. It will be understood that when one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element. In the present specification and drawings, components having substantially the same functional features are referred to the same reference numerals, and thus repeated descriptions may not be repeated.

Unless otherwise specified herein, it will be understood that when one layer, film, section, sheet, etc. is referred to be "on" another element, it includes not only a case where one layer, film, section, sheet, etc. is "directly on" another element, but also a case where intervening elements are present therebetween.

Unless otherwise specified herein, the singular may also include the plural. Also, unless otherwise specified herein, the expression "A or B" may have a meaning that "A may be included, B may be included, or both A and B may be included."

The expression "a combination thereof" as used herein may refer to mixtures, stacks, composites, copolymers, alloys, blends, reaction products, etc.

Unless otherwise defined herein, the term "particle diameter" may refer to an average particle diameter. Also, the term " particle diameter" may refer to an average particle diameter D50 which is a diameter of particles having a cumulative volume of 50 volume% in a particle size distribution. The average particle diameter D50 may be measured by any suitable methods generally used in the art. For example, it may be measured by using a particle size analyzer, and/or may be measured through images obtained by a transmission electron microscope and/or a scanning electron microscope. In some embodiments, after measuring by using a measuring device using dynamic light-scattering, performing data analysis, counting the number of particles for each particle size range, and then calculating, the average particle diameter D50 value may be obtained. In some embodiments, the average particle diameter D50 may be measured by a laser diffraction method. In some embodiments, at the time of measuring by a laser diffraction method, particles to be measured may be dispersed in a dispersion medium, and then introduced into a commercially available laser diffraction particle diameter measuring device (e.g., MT 3000 by Microtrac Company). After applying 60 W of ultrasonic waves at about 28 kHz thereto, the average particle diameter D50 based on 50% of the particle diameter distribution in the measuring device may be calculated.

The term "metal" as used herein may include both a metal and a metalloid, such as silicon and germanium, in an elemental state or an ionic state.

The term "alloy" as used herein may refer to a mixture of two or more metals.

The term "cathode active material" as used herein may refer to a cathode material capable of undergoing lithiation and delithiation.

The term "anode active material" as used herein may refer to an anode material capable of undergoing lithiation and delithiation.

The terms "lithiation" and "lithiate" as used herein may refer to a process of adding lithium to a cathode active material or an anode active material.

The terms "delithiation" and "delithiate" as used herein may refer to a process of removing lithium from a cathode active material or an anode active material.

The terms "charging" and "charge" as used herein may refer to a process of providing electrochemical energy to a battery.

The terms "discharging" and "discharge" as used herein may refer to a process of eliminating or withdrawing electrochemical energy from a battery.

The terms "cathode" and "positive electrode" as used herein may refer to an electrode in which electrochemical reduction and lithiation occur during a discharge process.

The terms "anode" and "anode" as used herein may refer to an electrode in which electrochemical oxidation and delithiation occur during a charge process.

The term "thickness" as utilized herein refers to, for example, an average thickness, and an average width respectively. The "thickness" measured utilizing software from a scanning electron microscope image.

The porosity of the anode, the host layer, the first MCMB-containing layer, and the second MCMB-containing layer in the lithium metal battery are analyzed by using an SEM. The volume occupied by the pores was examined by using an SEM, and then determined as porosity.

The term "lithium-substituted functional group" refers to a functional group that has good affinity for lithium ions and has a lone pair of electrons.

Hereinafter, an anode for a lithium metal battery according to embodiments, a lithium metal battery including the anode, and a method of preparing the anode will be described in more detail.

An anodeless lithium metal battery may be a battery using an anode current collector alone without an anode active material layer, wherein the battery may be operated through a process in which lithium ions transferred from a cathode are precipitated on a surface of an anode current collector upon charging, and the lithium precipitated on the surface of the anode current collector dissolves again and intercalates into the cathode upon discharging.

Such an anodeless lithium metal battery may have advantages of maximizing or increasing the energy density per volume or weight of the battery because a lithium metal used as an anode active material is omitted. However, lithium metal precipitated during operation gives rise to growth of lithium dendrites due to a non-uniform current crowding phenomenon during oxidation/reduction processes. Lithium dendrites may not only cause loss of the lithium anode and reduce the capacity and lifespan of the battery, but also cause a short circuit at an anode and a cathode and give rise to safety issues.

To solve these problems, a method of introducing a protective layer on top of an anode current collector has been proposed to reduce side reactions by minimizing or reducing contact between lithium and an electrolyte solution, thereby minimizing or reducing exposure of the electrolyte solution to the electrode surface and creating a uniform (or substantially uniform) flow of lithium ions throughout the electrode. In some embodiments, a method of introducing a host material that acts as a framework for lithium electrodeposition and structurally controls the growing lithium has been proposed. However, if an electrically conductive material is used as a host, a top electrodeposition phenomenon may occur in which lithium fails to smoothly enter the structure of the host and rather accumulates on top. As such, if lithium electrodeposition occurs on top of the host in the host layer having a three-dimensional structure, problems such as wasting space inside the host and not being able to control the shape of the lithium metal may occur, and thus improvements are needed.

To solve these problems, an aspect of embodiments provides an anode for a lithium metal battery, the anode including: an anode current collector; a host layer on the anode current collector and including mesocarbon microbeads (MCMBs); a first MCMB-containing layer including MCMBs and a first lithium-ion conducting polymer; and a second MCMB-containing layer including MCMBs and a second lithium-ion conducting polymer, wherein the electrical conductivity of each of the first lithium-ion conducting polymer and the second lithium-ion conducting polymer may be 10⁻⁸ S/m or less, and the amount of the second lithium-ion conducting polymer may be adjusted to be greater than that of the first lithium-ion conducting polymer.

If the amount of the second lithium-ion conducting polymer is adjusted to be greater than that of the first lithium-ion conducting polymer, lithium may be densely electrodeposited into the host layer, and the volume change of lithium metal that occurs during charging/discharging of the lithium metal battery and the electrodeposition into the dendrites may be effectively controlled.

The concentration of MCMBs in the first MCMB-containing layer is different from the concentration of MCMBs in the second MCMB-containing layer.

For example, the concentration of MCMBs in the first MCMB-containing layer is higher than the concentration of MCMBs in the second MCMB-containing layer.

The anode may be prepared by sequentially electrospinning solutions containing MCMBs and a lithium-ion conducting polymer in different mixed weight ratios on top of the anode current collector to form a three-layer coating layer that increases the proportion of the lithium-ion conducting polymer, which is a non-conductor, as it moves away from the anode current collector, resulting in low electrical conductivity.

A host structure according to embodiments may include the host layer, the first MCMB-containing layer, and the second MCMB-containing layer. The host structure may include or consist of: the host layer as the bottom layer having high electrical conductivity due to MCMBs; the first MCMB-containing layer; and the second MCMB-containing layer having low electrical conductivity due to polyacrylonitrile (PAN) electrospun fibers. Through this, if an insertion reaction of lithium ions into the MCMBs is followed by electrodeposition into lithium metal, the electrodeposition of the lithium metal may be induced from the bottom of the host structure in the bottom-up direction. PAN contains a nitrile group having good affinity for lithium ions in a molecule, and thus the electrodeposition of the lithium metal may be formed in a uniform (or substantially uniform) shape. In some embodiments, a host structure for the lithium metal battery that increases the utilization of the internal structure of the host structure, enables the lithium metal electrodeposition in a stable form without (or substantially without) forming dendrites, and has higher energy density than existing lithium ion batteries may be prepared.

The first lithium-ion conducting polymer and the second lithium-ion conducting polymer may each have an electricalconductivity of, for example, 10⁻⁸ S/m or less, for example, in a range of about 10⁻¹⁰ S/m to about 10⁻⁸ S/m, and may each include a lithium-substituting functional group. The lithium-substituting functional group may be, for example, a nitrile group, an ether group, etc.

The first lithium-ion conducting polymer and the second lithium-ion conducting polymer may each be polyethylene oxide (PEO), polyacrylonitrile (PAN), polymethyl methacrylate (PMMA), poly(vinylidene fluoride-hexafluoropropylene) (PVDF-HFP), or a combination thereof.

The amount of the first lithium-ion conducting polymer may be in a range of about 3 parts by weight to about 20 parts by weight, about 5 parts by weight to about 20 parts by weight, about 5 parts by weight to about 15 parts by weight, about 5 parts by weight to about 10 parts by weight, for example, about 6 parts by weight to about 10 parts by weight, based on 100 parts by weight of the total weight of the first MCMB-containing layer.

The amount of the second lithium-ion conducting polymer may be in a range of about 5 parts by weight to about 30 parts by weight, about 10 parts by weight to about 30 parts by weight, about 10 parts by weight to about 25 parts by weight, about 10 parts by weight to about 20 parts by weight, about 10 parts by weight to about 18 parts by weight, for example, about 12 parts by weight to about 17 parts by weight, based on 100 parts by weight of the total weight of the second MCMB-containing layer. If the amount of the first lithium-ion conducting polymer in the first MCMB-containing layer and the amount of the second lithium-ion conducting polymer in the second MCMB-containing layer are within the ranges above, the lithium metal battery in which the lithium metal is electrodeposited in a stable form without (or substantially without) dendrites while increasing the utilization of the internal structure of the host structure and of which the energy density is improved may be prepared.

The thickness of the host layer may be in a range of about 10 µm to about 60 µm, about 15 µm to about 55 µm, about 20 µm to about 50 µm, or about 20 µm to about 40 µm. The thickness of the first MCMB-containing layer may be in a range of about 5 µm to about 30 µm, and the thickness of the second MCMB-containing layer may be in a range of about 5 µm to about 30 µm. The thickness ratio of the host layer to the first MCMB-containing layer may be in a range of about 5:1 to about 1:1, about 4.5:1 to about 1:1, about 4:1 to about 1:1, about 3.5:1 to about 1:1, or about 3:1 to about 1:1. The thickness ratio of the host layer to the second MCMB-containing layer may be in a range of about 5:1 to about 1:1, about 4.5:1 to about 1:1, about 4:1 to about 1:1, about 3.5:1 to about 1:1, or about 3:1 to about 1:1. If the thicknesses are within the ranges above, the lithium metal battery having excellent energy density, excellent high rate characteristics, and improved lifespan characteristics may be prepared without (or substantially without) increasing the internal resistance and degrading the energy density of the lithium metal battery.

The MCMBs as used herein may have a size (e.g., a particle size) in a range of about 1 µm to about 50 µm, a specific surface area in a range of about 0.2 m²/g to about 5 m²/g, about 0.3 m²/g to about 4 m²/g, about 0.5 m²/g to about 3 m²/g, or about 0.8 m²/g to about 2 m²/g, a true density of 2.10 g/cm³ or more, 2.20 g/cm³ or more, or in a range of about 2.2 g/cm³ to about 3 g/cm³. The MCMBs may be mesophase spherical graphite particles, and may have an average circularity in a range of about 0.920 to about 0.950 or about 0.92 to about 0.94. If the size, the specific surface area, and the true density of the MCMBs are within the ranges above, the ability of the lithium metal battery to accommodate electrodeposited lithium may be excellent. The specific surface area may be measured by a BET method.

The lithium metal may be included in the host layer, between the host layer and the first MCMB-containing layer, in the second MCMB-containing layer, or a combination thereof.

In the anode according to embodiments, the host layer may further include a binder. The binder may be carboxymethyl cellulose (CMC), styrene-butadiene rubber (SBR), polytetrafluoroethylene, polyvinylidene fluoride, polyethylene, a vinylidene fluoride/hexafluoropropylene copolymer, PAN, PMMA, or a combination thereof.

The amount of the MCMBs may be in a range of about 85 parts by weight to about 97 parts by weight, about 88 parts by weight to about 96 parts by weight, or about 90 parts by weight to about 95 parts by weight, based on 100 parts by weight of the total weight of the host layer. If the amount of the MCMBs is within the ranges above, the lithium metal electrodeposition may be effectively induced upon the occurrence of electrodeposition of lithium metal after the insertion reaction of lithium ions.

The anode may have porosity in a range of about 50% to about 70% or about 55% to about 65%, the host layer may have porosity in a range of about 50% to about 60% or about 52% to about 58%, the first MCMB-containing layer may have porosity in a range of about 55% to about 65% or about 58% to about 62%, and the second MCMB-containing layer may have porosity in a range of about 65% to about 75% or about 68% to about 73%. If the anode, the host layer, the first MCMB-containing layer, and the second MCMB-containing layer each have the porosity within the ranges above, the ability of the lithium metal battery to store the electrodeposited lithium may be improved.

The first lithium-ion conducting polymer and the second lithium-ion conducting polymer may be formed by electrojetting such as electrospinning, and may each have an average diameter in a range of about 0.001 nm to about 1,000 nm, about 0.01 nm to about 800 nm, about 0.01 nm to about 700 nm, about 0.01 nm to about 500 nm, about 50 nm to about 500 nm, or about 100 nm to about 500 nm. If the first lithium-ion conducting polymer and the second lithium-ion conducting polymer each has the average diameter within the ranges above, the lithium metal battery in which the lithium metal is electrodeposited in a stable form without (or substantially without) dendrites and of which the energy density may be improved may be prepared.

Between the anode current collector and the host layer, a lithium electrodeposition-inducing layer, a protective layer, or a combination thereof may be further included.

According to embodiments, the generation and/or growth of lithium dendrites on the anode current collector may be effectively prevented or reduced. In some embodiments, the cycle characteristics and the stability of the lithium metal battery including the aforementioned anode may be improved.

The weight average molecular weight of the first lithium-ion conducting polymer and the second lithium-ion conducting polymer may be in a range of about 10,000 Da to about 500,000 Da, about 10,000 Da to about 500,000 Da, about 10,000 Da to about 400,000 Da, about 10,000 Da to about 300,000 Da, about 10,000 Da to about 200,000 Da, about 50,000 Da to about 150,000 Da, about 70,000 Da to about 100,000 Da, or about 80,000 Da to about 100,000 Da. If the weight average molecular weight of the first lithium-ion conducting polymer and the second lithium-ion conducting polymer is within the ranges above, the lithium electrodeposition may occur in the host layer, and the lithium metal may be electrodeposited in a bottom-up manner in the host layer.

The anode according to embodiments may further include an anode active material layer.

The anode active material layer may include: a carbon-based material; a mixture of a carbon-based material and one or more selected from a first metal; a composite of a carbon-based material and one or more selected from a first metal; or a combination thereof, wherein the carbon-based material may include amorphous carbon, and the amorphous carbon may have an average particle diameter in a range of about 10 nm to about 100 nm. The carbon-based material may include carbon black, carbon nanotubes, carbon nanofibers, fullerene, activated carbon, carbon fibers, or a combination thereof.

A lithium metal layer may be additionally between the anode current collector and one surface of the protective layer. A lithium metal layer may be additionally on the other surface of the protective layer facing away from the one surface of the protective layer.

Another aspect of embodiments provides a lithium metal battery including: a cathode; the anode according to embodiments; and an electrolyte between the cathode and the anode.

The electrolyte may be a liquid electrolyte, a solid electrolyte, a gel polymer electrolyte, or a combination thereof.

The solid electrolyte may include an oxide-based solid electrolyte, a sulfide-based solid electrolyte, a polymer solid electrolyte, or a combination thereof, and the gel electrolyte may include a polymer gel electrolyte.

The cathode may include a cathode current collector and a cathode active material layer, and at least one of the cathode current collector and the anode current collector may include a base film and a metal layer on one surface or both surfaces (e.g., two opposing surfaces) of the base film, wherein the base film may include a polymer, the polymer may include polyethylene terephthalate (PET), polyethylene (PE), polypropylene (PP), polybutylene terephthalate (PBT), polyimide (PI), or a combination thereof, and the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof.

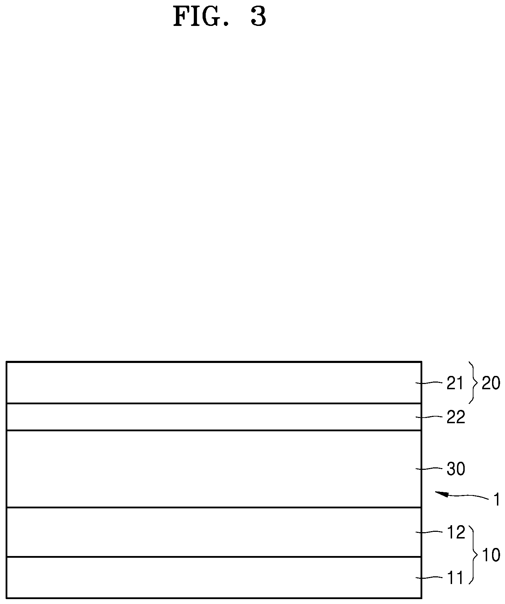

Referring to FIG. 3, a lithium metal battery 1 may include an anode 20 including an anode current collector 21, and an anode active material layer may be absent.

A host structure 22 may be between the anode current collector 21 and the electrolyte 30. The host structure 22 may include a host layer, a first MCMB-containing layer, and a second MCMB-containing layer, wherein the host layer may be adjacent to the anode current collector 21.

The lithium metal may be included in the host layer, between the host layer and the first MCMB-containing layer, in the second MCMB-containing layer, or a combination thereof.

The cathode 10 may be sequentially on the electrolyte 30. The cathode 10 may include a cathode active material layer 12 and a cathode current collector 11.

An anode active material layer may be further between the anode current collector 21 and the host structure 22. The anode active material layer may include a lithium metal and/or a lithium alloy.

The lithium metal may include, for example, a lithium metal foil, a lithium alloy foil, or a combination thereof. The lithium metal may be in the form of powder, and the lithium powder may include lithium metal powder, lithium alloy powder, or a combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, and/or the like. The anode active material layer including a lithium metal foil may be, for example, a lithium metal layer. The anode active material layer including a lithium alloy foil may be, for example, a lithium alloy layer. The anode active material layer including lithium metal powder and/or lithium alloy powder may be introduced by coating the anode current collector 21 with a slurry containing lithium powder and a binder. The binder may be, for example, a fluorine-based binder such as polyvinylidene fluoride (PVDF). The anode active material layer may be free of carbon-based anode active materials. For example, the active material layer may be substantially free of carbon-based anode active materials such that carbon-based anode active materials are present, if at all, only as an incidental impurity. In some embodiments, the active material layer may be completely free of carbon-based anode active materials. In some embodiments, the anode active material layer may consist of a metal-based anode active material.

The thickness of the lithium metal may be, for example, in a range of about 1 µm to about 50 µm, about 1 µm to about 30 µm, about 10 µm to about 30 µm, or about 10 µm to about 80 µm. If the thickness of the lithium metal is within the ranges above, the lifespan characteristics of the lithium metal battery 1 including the host structure 22 may be further improved.

The lithium metal battery 1 according to embodiments may not include an anode active material layer between the anode current collector 21 and the host structure 22. The anode 20 not including an anode active material layer may be introduced into the lithium metal battery 1 together with the cathode 10 and the electrolyte 30. By charging the lithium metal battery 1, a lithium metal may be plated between the anode current collector 21 and the host structure 22, and this plated lithium metal may serve as an anode active material layer. An anode active material layer may be a plated lithium layer.

The lithium metal battery 1 may further include a separator.

The separator may have a pore diameter generally in a range of about 0.01 µm to about 10 µm, and a thickness generally in a range of about 5 µm to about 20 µm. For use as the separator, for example, an olefin-based polymer such as polypropylene; and/or a sheet and/or non-woven fabric made of glass fiber and/or polyethylene may be used. If a solid polymer electrolyte is used as the electrolyte, the solid polymer electrolyte may serve as a separator.

The olefin-based polymer among the separator may include, for example, polyethylene, polypropylene, or a multi-layer film of two or more layers thereof, and examples of the multi-layer may include a two-layer separator of polyethylene/polypropylene, a three-layer separator of polyethylene/polypropylene/polyethylene, a three-layer separator of polypropylene/polyethylene/polypropylene, and/or the like.

The separator may include: a porous substrate; and a coating layer on one surface or both surfaces (e.g., two opposing surfaces) of the porous substrate and including an organic material, an inorganic material, or a combination thereof.

The porous substrate may be: polyolefin such as polyethylene, polypropylene, etc.; polyester such as polyethylene terephthalate, polybutylene terephthalate, etc.; a polymer selected from polyacetal, polyamide, polyimide, polycarbonate, polyether ketone, polyaryl ether ketone, polyetherimide, polyamide-imide, polybenzoimidazole, polyether sulfone, polyphenylene oxide, a cyclic olefin copolymer, polyphenylene sulfide, polyethylene naphthalate, glass fiber, Teflon, and polytetrafluoro ethylene; and/or a polymer film consisting of a copolymer or mixture of two or more of the foregoing.

The organic material may include a polyvinylidene fluoride-based polymer and/or a (meta)acryl-based polymer.

The inorganic matter may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiO₃, Mg(OH)₂, boehmite, and a combination thereof, but is not limited thereto.

The organic material and the inorganic material may be mixed in a single coating layer, or may exist in a laminated form of an organic coating layer including the organic material and an inorganic coating layer including the inorganic material.

In the lithium metal battery according to embodiments, the liquid electrolyte may contain a lithium salt and an organic solvent.

The organic solvent may serve as a medium through which ions involved in an electrochemical reaction of the battery may move. The organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like. The aprotic solvent may include: a nitrile solvent such as R-CN (wherein R may be a linear, branched, or cyclic C2-C20 hydrocarbon group, and may include a double bond, an aromatic ring, or an ether group), etc.; an amide solvent such as dimethylformamide, etc.; a dioxolane solvent such as 1,3-dioxolane, 1,4-dioxolane, etc.; a sulfolane solvent; and/or the like.

Such non-aqueous organic solvent may be used alone or in combination of two or more.

If the carbonate-based solvent is used, cyclic-type carbonate and chain-type carbonate may be used in combination, and the cyclic-type carbonate and the chain-type carbonate may be mixed together in a volume ratio in a range of about 1:1 to about 1:9.

The organic solvent may be, for example, an aprotic organic solvent such as N-methyl-2-pyrrolidone, propylene carbonate, ethylene carbonate, butylene carbonate, dimethyl carbonate, diethyl carbonate, gamma-butylolactone, 1,2-dimethoxy ethane, tetrahydrofuran, 2-methyl tetrahydrofuran, dimethyl sulfoxide, 1,3-dioxolane, formamide, dimethyl formamide, dioxolane, acetonitrile, nitromethane, methyl formate, methyl acetate, phosphate triester, trimethoxy methane, a dioxolane derivative, sulfonal, methyl sulfonal, 1,3-dimethyl-2-imidazolidinone, a propylene carbonate derivative, a tetrahydrofuran derivative, ether, methyl propionate, ethyl propionate, and/or the like. Among the aforementioned examples, the carbonate-based solvent such as propylene carbonate, ethylene carbonate, butylene carbonate, dimethyl carbonate, diethyl carbonate, and/or the like may be used.

The lithium salt may be a substance that dissolves in the organic solvent and acts as a source of lithium ions in the battery, enabling a basic operation of the lithium secondary battery and promoting the movement of lithium ions between the cathode and the anode. Representative examples of the lithium salt may include one or two selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂)(wherein x and y may each be an integer from 1 to 20), lithium trifluoromethane sulfonate, lithium tetrafluoroethane sulfonate, lithium difluorobis(oxalato)phosphate (LiDFOB), and lithium bis(oxalato)borate (LiBOB).

The concentration of the lithium salt in the liquid electrolyte may be, for example, in a range of about 0.1 M to about 5.0 M, about 0.1 M to about 3 M, or about 0.5 M to about 2 M. Within the ranges above, a suitable or sufficient amount of lithium ions utilized for charging and discharging of the lithium metal battery 1 may be generated.

If the gel-type polymer electrolyte is present in the pores of the porous substrate, the interfacial resistance between the cathode, the anode, and the separator may be minimized or reduced, thereby facilitating lithium transfer.

According to embodiments, an anode active material layer may be provided at the time of assembling the lithium metal battery 1. According to other embodiments, an anode active material layer may be included due to a lithium metal being plated after charging. For example, the anode active material layer may be omitted at the time of assembly and may be subsequently formed by plating of lithium metal during charging. In some embodiments, the anode active material layer may be a plated lithium layer.

Such an anode active material layer may include a lithium metal and/or a lithium alloy.

If the anode active material layer is provided at the time of assembly, a carbon-based material alone, or a combination of a carbon-based material and at least one selected from a metal and a metalloid may be included.

The carbon-based material may include amorphous carbon, wherein the amorphous carbon may have an average particle diameter in a range of about 10 nm to about 100 nm. The carbon-based material may include carbon black (CB), acetylene black (AB), furnace black (FB), ketjen black (KB), graphene, or a combination thereof.

The anode material layer may include a lithium metal foil, lithium metal powder, a lithium alloy foil, lithium alloy powder, or a combination thereof, and the lithium alloy may include lithium and a first metal.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

The anode active material layer may include, for example, a lithium metal foil, lithium alloy powder, or a combination thereof. The anode active material layer including lithium metal powder and/or lithium alloy powder may be introduced by coating the anode current collector 21 with a slurry containing lithium powder and a binder. The binder may be, for example, a fluorine-based binder such as polyvinylidene fluoride (PVDF). The anode active material layer may be free of a carbon-based anode active material. For example, the active material layer may be substantially free of carbon-based anode active materials such that carbon-based anode active materials are present, if at all, only as an incidental impurity. In some embodiments, the active material layer may be completely free of carbon-based anode active materials. In some embodiments, the anode active material layer may consist of a metal-based anode active material.

The binder may serve to adhere anode active material particles to each other, and may also serve to adhere the anode active material to a current collector The binder may be a non-aqueous binder, an aqueous binder, a dry binder, or a combination thereof.

Examples of the non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from a styrene-butadiene rubber, a (meta)acrylated styrene-butadiene rubber, a (meta)acrylonitrile-butadiene rubber, a (meta)acryl rubber, a butyl rubber, a fluorine rubber, a polyethylene oxide, polyvinylpyrrolidone, polyepichlorohydrin, polyphosphazene, poly(meta)acrylonitrile, an ethylene propylene-diene copolymer, polyvinylpyridine, chlorosulfonated polyethylene, latex, a polyester resin, a (meta)acryl resin, a phenol resin, an epoxy resin, polyvinylalcohol, and a combination thereof.

If an aqueous binder is used as the binder in the anode, a cellulose-based compound capable of imparting or increasing viscosity may be further included. The cellulose-based compound may be a mixture of one or more of carboxymethyl cellulose, hydroxypropylmethyl cellulose, methyl cellulose, and/or alkali metal salts thereof. The alkali metal may include Na, K, and/or Li.

As a conductive material (e.g., an electrically conductive material) for the anode, which is a material used to provide conductivity (e.g., electrical conductivity) to an electrode, any suitable electrically conductive material may be used as long as it does not cause a chemical change in a battery (e.g., does not cause an undesirable chemical change in the battery). Examples of the conductive material may include: a carbon-based material such as natural graphite, artificial graphite, CB, AB, KB, carbon fiber, carbon nanofiber, carbon nanotube, etc.; a metal-based material in the form of metal powder and/or metal fiber including Cu, Ni, Al, Ag, etc.; a conductive polymer (e.g., an electrically conductive polymer) such as a polyphenylene derivative, etc.; or a mixture thereof.

The dry binder may be a polymer material capable of being fibrillized, and examples thereof may include polytetrafluoroethylene, polyvinylidene fluoride, a polyvinylidene fluoride-hexafluoropropylene copolymer, polyethyleneoxide, or a combination thereof.

The anode current collector 21 may include, for example, a base film and a metal layer on one or oppose sides of the base film. The base film may include, for example, a polymer. The polymer may be, for example, a thermoplastic polymer. The polymer may include, for example, PET, PE, PP, PBT, PI, or a combination thereof. The polymer may be an insulating polymer (e.g., an electrically insulating polymer). If the base film includes an insulating thermoplastic polymer (e.g., an electrically insulating thermoplastic polymer), the base film may be softened and/or liquified upon the occurrence of a short circuit, so that the operation of a battery may stop and a rapid increase in current may then be suppressed or reduced. The metal layer may include, for example, Cu, stainless steel, Ti, Fe, Co, Ni, and/or an alloy thereof. The metal layer may correspond to, for example, a first metal substrate. The metal layer may further include a coating layer including a second metal. The anode current collector 21 may further include a metal chip and/or a lead tab. Details on the base film, the metal layer, the metal chip, and the lead tab of the anode current collector 21 may be understood by referring to a cathode current collector 21 described below. If the anode current collector 21 has the aforementioned structure, the weight of the anode 20 may be reduced, and consequently, the energy density of the anode 20 and the lithium metal battery 1 may be improved.

In embodiments of the present disclosure, the cathode current collector 11 may use a plate and/or a foil, each including or consisting of, for example, In, Cu, Mg, stainless steel, Ti, Fe, Co, Ni, Zn, Al, Ge, Li, and/or an alloy thereof. The thickness of the cathode current collector 11 may be, for example, in a range of about 1 µm to about 100 µm, about 1 µm to about 50 µm, about 5 µm to about 25 µm, or about 10 µm to about 20 µm.

The cathode current collector 11 may include, for example, a base film and a metal layer on one or both surfaces (e.g., two opposing surfaces) of the base film. The base film may include, for example, a polymer. The polymer may be, for example, a thermoplastic polymer. The polymer may include, for example, PET, PE, PP, PBT, PI, or a combination thereof. The base film may be, for example, an insulator (e.g., an electrical insulator). If the base film includes an insulating thermoplastic polymer (e.g., an electrically insulating thermoplastic polymer), the base film may be softened and/or liquified upon the occurrence of a short circuit, so that the operation of a battery may stop and a rapid increase in current may then be suppressed or reduced. The metal layer may include, for example, In, Cu, Mg, stainless steel, Ti, Fe, Co, Ni, Zn, Al, Ge, and/or an alloy thereof. The metal layer may act as an electrochemical fuse, and thus may be cut in the event of an overcurrent to perform a short circuit prevention function. By adjusting the thickness of the metal layer, a limit current and a maximum current may be adjusted. The metal layer may be plated and/or deposited on the base film. If the thickness of the metal layer decreases, the limit current and/or the maximum current of the cathode current collector 11 may decrease, thereby improving the stability of the lithium metal battery 1. A lead tab may be added on the metal layer for connection with the outside. The lead tab may be welded to the metal layer or a laminate of metal layer/base film by ultrasonic welding, laser welding, spot welding, and/or the like. The metal layer may be electrically connected to the lead tab while melting the base film and/or the metal layer during welding. A metal chip may be added between the metal layer and the lead tab for stronger welding therebetween. The metal chip may be a thin piece of the same material as the metal in the metal layer. The metal chip may be, for example, a metal foil and/or a metal mesh. The metal chip may be, for example, an Al foil, a Cu foil, and/or an SUS foil. By welding the lead tab after providing the metal chip on the metal layer, the lead tab may be welded to a laminate of metal chip/metal layer or a laminate of metal chip/metal layer/base film. During the welding, the metal layer or the laminate of metal layer/metal chip may melt so that the metal layer and/or the laminate of metal layer/metal chip may be electrically connected to the lead tab. The metal chip and/or the lead tab may be added to a portion on the metal layer. The thickness of the base film may be, for example, in a range of about 1 µm to about 50 µm, about 1.5 µm to about 50 µm, about 1.5 µm to about 40 µm, or about 1 µm to about 30 µm. If the thickness of the base film is within the ranges above, the weight of an electrode assembly may be reduced more effectively. The melting point of the base film may be, for example, in a range of about 100 °C to about 300 °C, about 100 °C to about 250 °C, or about 100 °C to about 200 °C. If the melting point of the base film is within the ranges above, the base film may be melted and easily connected to the lead tab in the process of welding the lead tab. Surface treatment such as corona treatment may be performed on the base film in order to improve adhesion between the base film and the metal layer. The thickness of the metal layer may be, for example, in a range of about 0.01 µm to about 3 µm, about 0.1 µm to about 3 µm, about 0.1 µm to about 2 µm, or about 0.1 µm to about µm. If the thickness of the metal layer is within the ranges above, the stability of an electrode assembly may be secured while maintaining the electrical conductivity of the electrode assembly. The thickness of the metal chip may be, for example, in a range of about 2 µm to about 10 µm, about 2 µm to about 7 µm, or about 4 µm to about 6 µm. If the thickness of the metal chip is within the ranges above, the connection between the metal layer and the lead tab may be performed more easily. If the cathode current collector 11 has the aforementioned structure, the weight of the cathode 10 may be reduced, and consequently, the energy density of the cathode 10 and the lithium metal battery 1 may be improved.

The anode active material layer may include an anode active material and a binder.

The anode active material may be, for example, in the form of particles. The particle diameter of the anode active material in the form of particles may be, for example, in a range of about 10 nm to about 10 µm, about 10 nm to about 1 µm, about 10 nm to about 500 nm, about 10 nm to about 100 nm, or about 20 nm to about 80 nm. If the average particle diameter of the anode active material is within the ranges above, lithium may be more easily subjected to reversible plating and/or dissolution during charging and discharging. The average particle diameter of the anode active material may be, for example, a median diameter D50 measured by using a laser particle size distribution meter.

The anode active material may include, for example, one or more selected from a carbon-based anode active material and a metal and/or metalloid anode active material. The carbon-based anode active material may be, for example, amorphous carbon. Examples of the amorphous carbon may include CB, AB, FB, KB, graphene, and/or the like, but are not necessarily limited thereto. Any suitable material categorized as amorphous carbon in the art may be used. The amorphous carbon may be carbon that has no or very low crystallinity, and in some embodiments, may be distinguished from crystalline carbon or graphite-based carbon. The metallic and/or metalloid anode active material may include at least one selected from Au, Pt, Pd, Au, Pt, Pd, Si, Ag, Al, Bi, Sn, and Zn, but is not necessarily limited thereto. Any suitable material available as a metallic and/or metalloid anode active material capable of forming an alloy and/or compound with lithium in the art may be used. For example, Ni does not form an alloy with lithium, and thus Ni is not regarded as a metallic anode active material in the present specification. Among such anode active materials, the anode active material layer may include a single anode active material, or may include a mixture of a plurality of different anode active materials. The anode active material layer may include, for example, a mixture of amorphous carbon with at least one metal selected from Au, Pt, Pd, Si, Ag, Al, Bi, Sn, and Zn. The mixing ratio of the mixture may be a weight ratio, and for example, may be in a range of about 10:1 to about 1:2, about 10:1 to about 1:1, about 7:1 to about 1:1, about 5:1 to about 1:1, or about 4:1 to about 2:1. The anode active material included in the anode active material layer may include, for example, a mixture of first particles consisting of amorphous carbon and second particles consisting of a metal and/or a metalloid. The metal may include, for example, Au, Pt, Pd, Si, Ag, Al, Bi, Sn, Zn, and/or the like. The amount of the second particle may be in a range of about 8 wt% to about 60 wt%, about 10 wt% to about 50 wt%, about 15 wt% to about 40 wt%, or about 20 wt% to about 30 wt%, based on the total weight of the mixture. If the amount of the second particles is within the ranges above, for example, the cycle characteristics of the lithium metal battery 1 may be further improved.

Examples of the binder included in the anode active material layer may include a styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like, but are not limited thereto. Any suitable material available as a binder in the art may be used. The binder may be used alone or in a combination of a plurality of different binders. If the anode active material layer does not include a binder, the anode active material layer may be easily detached from a ceramic coating layer or the anode current collector 21. The amount of the binder included in the anode active material layer may be, for example, in a range of about 1 wt% to about 20 wt% based on the total weight of the anode active material layer.

The thickness of the anode active material layer may be, for example, in a range of about 0.1 µm to about 500 µm or about 100 µm to about 50 µm. The thickness of the anode active material layer may be, for example, in a range of about 1% to about 50%, about 1% to about 30%, about 1% to about 10%, or about 1% to about 5%, of the thickness of a cathode active material layer. If the thickness of the anode active material layer is excessively small, lithium dendrites formed between the anode active material layer and the anode current collector 21 may cause the anode active material layer to collapse, making it difficult to improve the cycle characteristics of the lithium metal battery 1. If the thickness of the anode active material layer excessively increases, the lithium metal battery 1 employing the anode 20 may suffer a decrease in the energy density, making it difficult to improve the cycle characteristics of the lithium metal battery 1.

If the thickness of the anode active material layer decreases, for example, the charge capacity of the anode active material layer may also decrease. The charge capacity of the anode active material layer may be, for example, in a range of about 0.1% to about 50%, about 1% to about 30%, about 1% to about 10%, about 1% to about 5%, or about 1% to about 2%, based on the charge capacity of the cathode active material layer. If the charge capacity of the anode active material layer is excessively small, lithium dendrites formed between the anode active material layer and the anode current collector 21 may cause the anode active material layer to collapse, making it difficult to improve the cycle characteristics of the lithium metal battery 1. If the charge capacity of the anode active material layer excessively increases, the lithium metal battery 1 employing the anode 20 may suffer a decrease in the energy density, making it difficult to improve the cycle characteristics of the lithium metal battery 1. The charge capacity of the cathode active material layer 12 may be obtained by multiplying the charge capacity density (mAh/g) of the cathode active material by the mass of the cathode active material in the cathode active material layer 12. If several types (or kinds) of the cathode active material are used, for each cathode active material, the charge capacity density may be multiplied by the mass, and the sum of these values may be the charge capacity of the cathode active material layer 12. The charge capacity of the negative electrode active material layer may be calculated in the same way. The charge capacity of the anode active material layer may be obtained by multiplying the charge capacity density (mAh/g) of the anode active material by the mass of the anode active material in the anode active material layer. If several types (or kinds) of the anode active material are used, for each anode active material, the charge capacity density may be multiplied by the mass, and the sum of these values may be the charge capacity of the anode active material layer 22. The charge capacity densities of the cathode active material 12 and the anode active material may be capacities estimated by using a half-cell using a lithium metal as a counter electrode. The charge capacities of the cathode active material layer 12 and the anode active material layer may be directly measured by measuring the charge capacity obtained by using the half-cell. If the measured charge capacity is divided by the mass of each active material, the charge capacity density may be obtained. In some embodiments, the charge capacities of the cathode active material layer 12 and the anode active material layer may be initial charge capacity measured during charging at the first cycle.

### Lithium metal battery

A lithium metal battery according to embodiments may include: a cathode; an anode; and an electrolyte between the cathode and the anode. The lithium metal battery may further include a separator. Such a lithium metal battery may provide excellent lifespan characteristics concurrently (e.g., simultaneously).

For example, the lithium metal battery may be a lithium primary battery, a lithium secondary battery, a lithium-sulfur battery, a lithium-air battery, etc., but is not limited thereto. Any suitable lithium metal battery available in the art may be used.

The lithium metal battery may be, for example, prepared according to the following method, but the preparation method thereof is not limited thereto, and may be adjusted according to required or desired conditions.

### Cathode

First, a cathode active material composition may be prepared by mixing together a cathode active material, a conductive material (e.g., an electrically conductive material), a binder, and a solvent. The prepared cathode active material composition may be directly applied onto an aluminum current collector, and dried to prepare a cathode plate having a cathode active material layer thereon. In some embodiments, the cathode active material composition may be cast on a separate support, and then a film obtained by peeling off from the support may be laminated onto the aluminum current collector to prepare a cathode plate having a cathode active material layer thereon.

For use as the cathode active material, a compound (e.g., a lithiated intercalation compound) capable of reversible intercalation and deintercalation of lithium may be used. For example, one or more types (or kinds) of a composite oxide including lithium and a metal selected from Co, Mn, Ni, and a combination may be used as the cathode active material.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof may be used.

For example, a compound represented by one of the following formulae may be used: LiₐA_{1-b}X_{b}O₂-_{c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); and LiₐFePO₄ (where 0.90≤a≤1.8).

In the formulae above, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

For example, the cathode active material may be a high-nickel-based cathode active material in which the amount of nickel may be 80 mol% or more, 85 mol% or more, 90 mol% or more, 91 mol% or more, 94 mol% or more, or 99 mol% or less, based on 100 mol% of metals excluding lithium in the lithium transition metal composite oxide. The high-nickel-based cathode active material may achieve high capacity, and thus may be applied to a high-capacity, high-density lithium secondary battery.

A compound including a coating layer additionally provided on the surface of the aforementioned cathode compound may be also used, and a mixture of the aforementioned compound and a compound additionally provided with a coating layer may be also used. The coating layer provided on the surface of the compound may include, for example, a coating element compound, such as an oxide of a coating element, hydroxide of the coating element, oxyhydroxide of the coating element, oxycarbonate of the coating element, or hydroxycarbonate of the coating element. The compound constituting the coating layer may be amorphous and/or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, and/or the like. A further detailed description of the coating method is not necessary here because it should be readily apparent to those skilled in the art upon reviewing this disclosure.

For example, the cathode active material may be LiₐNiₓCo_{y}M_{z}O_{2-b}A_{b} (where 1.0≤a≤1.2, 0≤b≤0.2, 0.8≤x<1, 0<y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof, and A is F, S, Cl, Br, or a combination thereof), LiNiₓCo_{y}Mn_{z}O₂ (where 0.8≤x≤0.95, 0≤y≤0.2, 0<z≤0.2, and x+y+z=1), LiNiₓCo_{y}Al_{z}O₂ (where 0.8≤x≤0.95, 0≤y≤0.2, 0<z≤0.2, and x+y+z=1), LiNiₓCo_{y}Mn_{z}Al_{w}O₂ (where 0.8≤x≤0.95, 0≤y≤0.2, 0<z≤0.2, 0<w≤0.2, and x+y+z+w=1), LiₐCoₓM_{y}O_{2-b}A_{b} (where 1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof), LiₐNiₓMn_{y}M'_{z}O_{2-b}A_{b} (where 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a combination thereof, and A may be F, S, Cl, Br, or a combination thereof), LiₐM1ₓM2_{y}PO_{4-b}X_{b} (where 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), or a combination thereof, and M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof), and/or LiₐM3_{z}PO₄ (where 0.90≤a≤1.1 and 0.9≤z≤1.1, and M3 may be chromium (Cr), manganese (Mn), iron (Fe), cobalt (Co), nickel (Ni), copper (Cu), zirconium (Zr), or a combination thereof).

The conductive material may be used to provide conductivity (e.g., electrical conductivity) to an electrode, and in some embodiments, any suitable electrically conductive material may be used as long as it does not cause a chemical change in a battery including the conductive material (e.g., an undesirable chemical change in a battery including the conductive material). Examples of the conductive material may include: a carbon-based material such as natural graphite, artificial graphite, CB, AB, KB, carbon fiber, carbon nanofiber, carbon nanotube, etc.; a metal-based material in the form of metal powder and/or metal fiber including Cu, Ni, Al, Ag, etc.; a conductive polymer (e.g., an electrically conductive polymer) such as a polyphenylene derivative, etc.; or a mixture thereof.

In some embodiments, the cathode may not include, for example, a separate conductive material (e.g., a separate electrically conductive material).

The binder may serve to adhere cathode active material particles to each other, and may also serve to adhere the cathode active material to a current collector. Representative examples of the binder may include a polymer, such as polyvinylalcohol, carboxymethyl cellulose, hydroxypropyl cellulose, diacetyl cellulose, polyvinyl chloride, carboxylated poly(vinyl chloride), polyvinyl fluoride, and an ethylene oxide, polyvinylpyrrolidone, polyurethane, polytetrafluoroethylene, polyvinylidene fluoride, polyethylene, polypropylene, a styrene-butadiene rubber, a (meta)acrylated styrene-butadiene rubber, an epoxy resin, a (meta)acryl resin, a polyester resin, nylon, and/or the like, but are not limited thereto.

A plasticizer and/or a pore-forming agent may be added to the cathode active material composition to form pores in an electrode plate.

The cathode may include a cathode collector and a cathode active material layer on the cathode current collector. The cathode active material layer may include a cathode active material, and may further include a binder and/or a conductive material (e.g., an electrically conductive material).

In some embodiments, the cathode may further include an additive that may function as a sacrificial cathode.

The amounts of the cathode active material, the conductive material, the binder, and the solvent used in the cathode may be at any suitable levels generally used in a lithium battery. Depending on the intended use and composition of the lithium metal battery, one or more of the conductive material, the binder, and the solvent may be omitted.
the amount of the cathode active material may be in a range of about 90 wt% to about 99.5 wt% based on 100 wt% of the cathode active material layer, and the amounts of the binder and the conductive material may be in a range of about 0.5 wt% to about 5 wt%, respectively, based on 100 wt% of the cathode active material layer.

The cathode current collector may use, for example, a plate and/or a foil, each including or consisting of In, Cu, Mg, stainless steel, Ti, Fe, Co, Ni, Zn, a plate and/or foil made of aluminum (Al), germanium (Ge), lithium (Li) and/or an alloy thereof. The cathode current collector may be omitted. The thickness of the cathode current collector may be, for example, about 1 µm to about 100 µm, about 1 µm to about 50 µm, about 5 µm to about 25 µm, or about 10 µm to about 20 µm.

The cathode current collector may include, for example, a base film and a metal layer on one or both surfaces of the base film. The base film may include, for example, a polymer. The polymer may include, for example, PET, PE, PP, PBT, PI, or a combination thereof. The metal layer may include, for example, In, Cu, Mg, stainless steel, Ti, Fe, Co, Ni, Zn, Al, Ge, Li, and/or an alloy thereof. If the cathode current collector has the aforementioned structure, the weight of the electrode may be reduced, and consequently, the energy density of the lithium metal battery may be improved.

### Electrolyte

Next, the electrolyte may be prepared. The electrolyte may be, for example, a liquid electrolyte, a solid electrolyte, a gel electrolyte, or a combination thereof. The electrolyte may be, for example, an organic electrolyte solution. The organic electrolyte solution may be, for example, prepared by dissolving a lithium salt in an organic solvent.

Any suitable material available as an organic solvent in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolane, 4-methyl dioxolan, N, N-dimethyl formamide, dimethyl acetamide, dimethyl sulfoxide, dioxane, 1,2-dimethoxyethane, 35organa35es, dichloroethane, chlorobenzene, nitrobenzene, diethylene glycol, dimethyl ether, or a mixture thereof.35valuated3535organa35es

For use as the lithium salt, any suitable material available as a lithium salt in the art may be also used. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where 1≤x≤20 and 1≤y≤20), LiCl, Lil, or a mixture thereof. The concentration of the lithium salt may be, for example, about 0.1 M to about 5.0 M.

The solid electrolyte may include, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may include at least one selected from Li_{1+x+y}AlₓTi₂₋ₓSi_{y}P_{3-y}O₁₂ (where 0<x<2 and 0≤y<3), BaTiO₃, Pb(Zr,Ti)O₃(PZT), Pb₁₋ₓLaₓZr_{1-y} Ti_{y}O₃(PLZT)(where O≤x<1 and O≤y<1), PB(Mg₃Nb_{2/3})O₃-PbTiO₃(PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M may be Te, Nb, or Zr, and x may be an integer from 1 to 10). The solid electrolyte may be prepared by a sintering method and/or the like. For example, the oxide-based solid electrolyte may include a garnet-type solid electrolyte selected from Li₇La₃Zr₂O₁₂ (LLZO) and Li₃₊ₓLa₃Zr₂₋ₐMₐO₁₂ (M-doped LLZO)(where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, or a combination thereof. Particles of the sulfide-based solid electrolyte may include Li₂S, P₂S₅, SiS₂, GeS₂, B₂S₃, or a combination thereof. The particles of the sulfide-based solid electrolyte particles may include Li₂S and/or P₂S₅. The particles of the sulfide-based solid electrolyte particles have higher lithium-ion conductivity than other inorganic compounds. For example, the sulfide-based solid electrolyte may include Li₂S and P₂S₅. If the sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In addition, an inorganic solid electrolyte prepared by adding Li₃PO₄, halogen, a halogen compound, Li₂₊₂ₓZn₁₋ₓGeO₄ ("LISICON")(where 0≤x<1), Li_{3+y}PO₄₋ₓNₓ ("LIPON")(where 0<x<4 and 0<y<3), Li_{3.25}Ge_{0.25}P_{0.75}S₄("Thio-LISICON"), Li₂O-Al₂O₃-TiO₂-P₂O₅ ("LATP"), and/or the like to an inorganic solid electrolyte, such as Li₂S-P₂S₅, SiS₂, GeS₂, B₂S₃, or a combination thereof, may be used as the sulfide solid electrolyte. Non-limiting examples of the sulfide solid electrolyte material are: Li₂S-P₂S₅; Li₂S-P₂S₅-LiX (where X may be a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S -P₂S₅-ZₘSₙ (where 0<m<10, 0<n<10, and Z may be Ge, Zn, or Ga); Li₂S-GeS₂; Li₂S-SiS₂-Li₃PO₄; and Li₂S-SiS₂-LiₚMO_{q} (where 0<p<10, 0<q<10, and M may be P, Si, Ge, B, Al, Ga, or In). In some embodiments, the sulfide-based solid electrolyte material may be prepared by treating raw starting materials of the sulfide-based solid electrolyte material (e.g., Li₂S, P₂S₅, etc.) by a melt quenching method, a mechanical milling method, and/or the like. Also, a calcination process may be performed after the treatment. The sulfide-based solid electrolyte may be amorphous or crystalline, or may be in a mixed state.

The polymer solid electrolyte may include, for example, a mixture of a lithium salt and a polymer and/or a polymer including an ion-conducting functional group. The polymer solid electrolyte may be, for example, in a solid state at 25 °C and at 1 atm. The polymer solid electrolyte may not include liquid. The polymer of the polymer solid electrolyte may include, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), polystyrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol(PEG), polyacrylonitrile (PAN), polytetrafluoro ethylene (PTFE), polyethylene dioxythiophene (PEDOT), polypyrrole (PPY), polyacrylonitrile (PAN), polyaniline, polyacetylene, nafion, aquivion, flemion, gore, aciplex, morgane ADP, sulfonated poly(ether ether ketone)(SPEEK), sulfonated poly(arylene ether ketone ketone sulfone)(SPAEKKS), sulfonated poly(aryl ether ketone)(SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof, but embodiments are not limited thereto. Any suitable material available as a polymer electrolyte in the art may be used. For use as the lithium salt, any suitable material available as a lithium salt in the art may be used. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(where x and y may each be between 1 to 20), LiCl, Lil, or a mixture thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1,000 dalton (Da) or more, 10,000 Da or more, 100,000 Da or more, or 1,000,000 Da or more.

The gel electrolyte may be, for example, a polymer gel electrolyte. The gel electrolyte be in a gel state without including a polymer.

The polymer gel electrolyte may include, for example, a liquid electrolyte and a polymer, and/or an organic solvent and a polymer having an ion-conductive functional group. The polymer gel electrolyte may be, for example, in a gel state without including liquid. The liquid electrolyte used in the polymer gel electrolyte may be, for example, a mixture of ionic liquid, a lithium salt, and an organic solvent; a mixture of a lithium salt and an organic solvent; a mixture of ionic liquid and an organic solvent; or a mixture of a lithium salt, ionic liquid, and an organic solvent. The polymer used in the polymer gel electrolyte may be selected from polymers used in the polymer solid electrolyte. The organic solvent may be selected from organic solvents used in liquid electrolytes. The lithium salt may be selected from lithium salts used in polymer solid electrolytes. The ionic liquid may refer to a salt in a liquid state, and a molten salt at room temperature consisting solely of ions and having a melting point below room temperature. The ionic liquid may include, for example, at least one compound including a) at least one cation selected from ammonium, pyrrolidinium, pyridinium, pyrimidium, imidazolium, piperidinium, pyrazolium, oxazolium, pyridazinium, phosphonium, sulfonium, triazolium, and any mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂)₂N⁻, (C₂F₂SO₂)₂N⁻, (C₂F₂SO₂)(CF₂SO₂)N⁻, and (CF₂SO₂)₂N⁻. The polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, 500 Da or more, 1,000 Da or more, 10,000 Da or more, 100,000 Da or more, or 1,000,000 Da or more .

The lithium metal battery may further include a separator between the cathode and the anode.

For use as the separator, any suitable separator generally used in lithium batteries may be used. For use as the separator, for example, a separator exhibiting low resistance to the movement of ions in the electrolyte and excellent electrolyte solution-retaining ability may be used. For example, the separator may be in the form of non-woven fabric or woven fabric, each being formed of a material selected from glass fiber, polyester, Teflon, polyethylene, polypropylene, polytetrafluoroethylene (PTFE), or a combination thereof. For example, in a lithium ion battery, a rollable separator formed of polyethylene, polypropylene, and/or the like, may be used, and in a lithium ion polymer battery, a separator having excellent organic electrolyte solution-retaining ability may be used.

The separator may be, for example, prepared according to the following example method, but the preparation method thereof is not limited thereto, and may be adjusted according to required or desired conditions.

First, a separator composition may be prepared by mixing together a polymer resin, a filler, and a solvent. The separator composition may be directly applied onto an electrode, and then dried, so as to form a separator. In some embodiments, after casting a support with the separator composition and drying it, a separator film peeled off from the support may be laminated onto an electrode, so as to prepare a separator.

Types of a polymer used in the separator preparation may not be limited, and any suitable material available as the polymer used for the binder in an electrode plate may be used. For example, a vinylidene fluoride/hexafluoropropylene copolymer, polyvinylidene fluoride (PVDF), polyacrylonitrile, polymethyl methacrylate, or a mixture thereof may be used.

### Anode

The anode may include an anode current collector.

The anode current collector may include, for example, a base film and a metal layer on one surface or both sides (e.g., two opposing sides) of the base film. The base film may include, for example, a polymer. The polymer may be, for example, a thermoplastic polymer. The polymer may include, for example, PET, PE, PP, PBT, PI, or a combination thereof. If the base film includes a thermoplastic polymer, the base film may be liquefied upon the occurrence of a short circuit, and thus a rapid increase in current may be inhibited or reduced. The base film may be, for example, an insulator (e.g., an electrical insulator). The metal layer may include, for example, Cu, stainless steel, Ti, Fe, Co, Ni, and/or an alloy thereof. The metal layer may act as an electrochemical fuse, and thus may be cut in the event of an overcurrent to perform a short circuit prevention function. By adjusting the thickness of the metal layer, a limit current and a maximum current may be adjusted. The metal layer may be plated and/or deposited on the base film. If the thickness of the metal layer decreases, the limit current and/or the maximum current of the anode current collector may decrease, and thus the stability of a lithium metal battery may be improved. A lead tab may be added on the metal layer for the connection with the outside. The lead tab may be welded to the metal layer or a laminate of metal layer/base film by ultrasonic welding, laser welding, spot welding, and/or the like. The metal layer may be electrically connected to the lead tab while the base film and/or the metal layer melts during welding. A metal chip may be added between the metal layer and the lead tab for stronger welding therebetween. The metal chip may be a thin piece of the same material as the metal in the metal layer. The metal chip may be, for example, a metal foil and/or a metal mesh. The metal chip may be, for example, an Al foil, a Cu foil, and/or an SUS foil. By welding the lead tab after providing the metal chip on the metal layer, the lead tab may be welded to a laminate of metal chip/metal layer or a laminate of metal chip/metal layer/base film. During the welding, the metal layer or the laminate of metal layer/metal chip may melt so that the metal layer and/or the laminate of metal layer/metal chip may be electrically connected to the lead tab. The metal chip and/or the lead tab may be added to a portion on the metal layer. The thickness of the base film may be, for example, in a range of about 1 µm to about 50 µm, about 1.5 µm to about 50 µm, about 1.5 µm to about 40 µm, or about 1 µm to about 30 µm. If the thickness of the base film is within the ranges above, the weight of an electrode assembly may be reduced more effectively. The melting point of the base film may be, for example, in a range of about 100 °C to about 300 °C, about 100 °C to about 250 °C, or about 100 °C to about 200 °C. If the melting point of the base film is within the ranges above, the base film may be melted and easily connected to the lead tab in the process of welding the lead tab. To improve the adhesion between the base film and the metal layer, a surface treatment such as a corona treatment may be performed on the base film. The thickness of the metal layer may be, for example, in a range of about 0.01 µm to about 3 µm, about 0.1 µm to about 3 µm, about 0.1 µm to about 2 µm, or about 0.1 µm to about 1 µm. If the thickness of the metal layer is within the ranges above, the stability of an electrode assembly may be secured while maintaining the electrical conductivity of the electrode assembly. The thickness of the metal chip may be, for example, in a range of about 2 µm to about 10 µm, about 2 µm to about 7 µm, or about 4 µm to about 6 µm. If the thickness of the metal chip is within the ranges above, the connection between the metal layer and the lead tab may be performed more easily. If the anode current collector has the aforementioned structure, the weight of the electrode may be reduced, and consequently, the energy density of the lithium metal battery may be improved.

An anode active material layer may be on the anode current collector. The anode active material layer may be formed as a lithium plated layer after and/or during charging. In some embodiments, the anode active material layer may be provided by using an anode active material during the battery assembly.

A process of preparing the anode active material layer by using an anode active material may be the same as the process of preparing the cathode active material layer, except that an anode active material is used instead of a cathode active material in forming the cathode active material layer.

The lithium metal battery may further include, for example, a thin film including an element capable of forming an alloy with lithium on one surface of the anode current collector. The thin film may be between the anode current collector and the anode active material layer. The thin film may include, for example, an element capable of forming an alloy with Li. The element capable of forming an alloy with lithium may include, for example, Au, Ag, Zn, Ti, In, Si, Al, Bi, and/or the like, but is not necessarily limited thereto. Any suitable material available as the element capable of forming an alloy with lithium in the art may be used. The thin film may be formed of one of these metals and/or an alloy of several types (or kinds) of metals. Due to the thin film on one surface of the anode current collector, for example, the plated form of a first anode active material layer plated between the thin film and the anode active material layer may be further flattened, thereby further improving the cycle characteristics of the lithium metal battery.

### Separator

Any suitable separator generally used in lithium metal batteries may be used herein. The separator may include a liquid electrolyte, and the liquid electrolyte may be prepared by, for example, dissolving a lithium salt in an organic solvent.

The concentration of the lithium salt may be, for example, in a range of about 0.1 M to about 5.0 M, about 0.1 M to about 3 M, or about 0.5 M to about 2 M.

The lithium metal battery according to embodiments may further include a solid electrolyte. Examples of the solid electrolyte may include an oxide-based solid electrolyte, a sulfide-based solid electrolyte, or a combination thereof.

The solid electrolyte may be, for example, an oxide-based solid electrolyte. The oxide-based solid electrolyte may include at least one of Li_{1+x+y}AlₓTi₂₋ₓSi_{y}P_{3-y}O₁₂ (where 0<x<2 and 0≤y<3), Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1 ), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M may be Te, Nb, or Zr, and x may be an integer from 1 to 10). The solid electrolyte may be prepared by a sintering method and/or the like. For example, the oxide-based solid electrolyte may include a garnet-type solid electrolyte selected from Li₇La₃Zr₂O₁₂(LLZO) and Li₃₊ₓLa₃Zr₂₋ₐMₐO₁₂ (M-doped LLZO)(where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, or a combination thereof. Particles of the sulfide-based solid electrolyte may include Li₂S, P₂S₅, SiS₂, GeS₂, B₂S₃, or a combination thereof. The particles of the sulfide-based solid electrolyte particles may include Li₂S and/or P₂S₅. The particles of the sulfide-based solid electrolyte particles have higher lithium-ion conductivity than other inorganic compounds. For example, the sulfide-based solid electrolyte may include Li₂S and P₂S₅. If the sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In some embodiments, an inorganic solid electrolyte prepared by adding Li₃PO₄, a halogen, a halogen compound, Li₂₊₂ₓZn₁₋ₓGeO₄ ("LISICON", where 0≤x<1), Li_{3+y}PO₄-ₓNₓ ("LIPON")(where 0<x<4 and 0<y<3), Li_{3.25}Ge_{0.25}P_{0.75}S₄ ("ThioLISICON"), Li₂O-Al₂O₃-TiO₂-P₂O₅ ("LATP"), and/or the like to an inorganic solid electrolyte, such as Li₂S-P₂S₅, SiS₂, GeS₂, B₂S₃, or a combination thereof, may be used as the sulfide solid electrolyte. Non-limiting examples of the sulfide solid electrolyte material are: Li₂S-P₂S₅; Li₂S-P₂S₅-LiX (where X may be a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S -P₂S₅-ZₘSₙ (where 0<m<10, 0<n<10, and Z may be Ge, Zn, or Ga); Li₂S-GeS₂; Li₂S-SiS₂-Li₃PO₄; and Li₂S-SiS₂-LiₚMO_{q} (where 0<p<10, 0<q<10, and M may be P, Si, Ge, B, Al, Ga, or In). In some embodiments, the sulfide-based solid electrolyte material may be prepared by treating raw starting materials of the sulfide-based solid electrolyte material (e.g., Li₂S, P₂S₅, etc.) by a melt quenching method, a mechanical milling method, and/or the like. In some embodiments, a calcination process may be performed after the treatment. The sulfide-based solid electrolyte may be amorphous or crystalline, or may be in a mixed state.

### Lithium metal battery

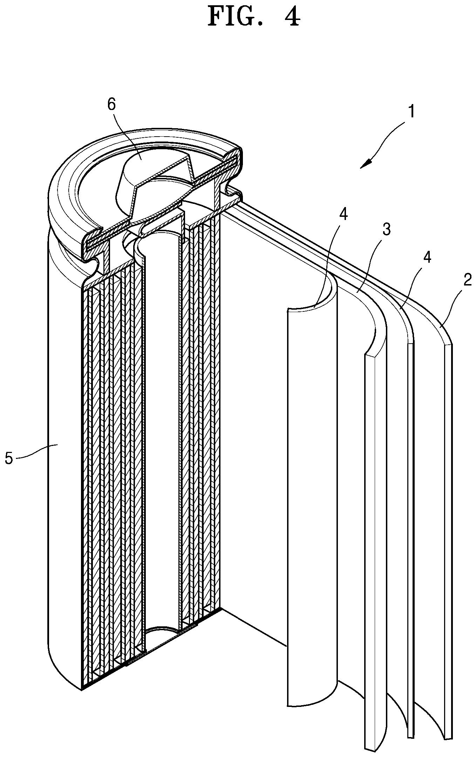

Referring to FIG. 4, the lithium metal battery 1 according to embodiments may include a cathode 3, an anode 2 according to embodiments, and an electrolyte 4. A gel-type polymer electrolyte may be between the electrolyte 4 and the cathode 3. The cathode 3, the anode 2, and the electrolyte 4 may be wound or folded and accommodated in a battery case 5. the battery case 5 may be filled with an organic electrolyte solution, and then sealed with a cap assembly, thereby completing the manufacture of the lithium metal battery 1. The battery case 5 may be a cylindrical-type, but the shape of the battery case 5 is not limited thereto. For example, the battery case 5 may be a square-type, a thin-film type, or the like.

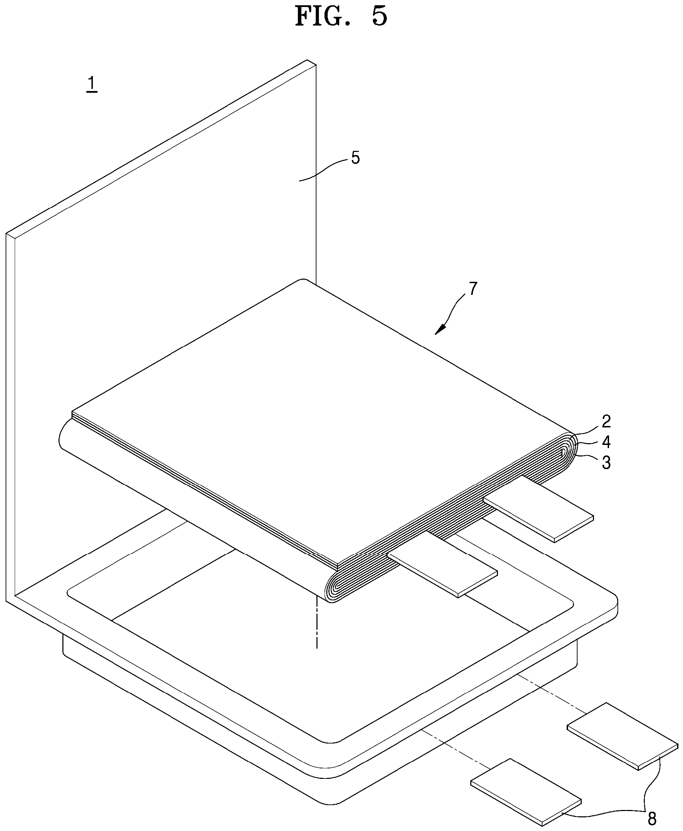

Referring to FIG. 5, a lithium metal battery 1 according to embodiments may include a cathode 3, an anode 2, and an electrolyte 4. The electrolyte 4 may be between the cathode 3 and the anode 2, and the cathode 3, the anode 2, and the electrolyte 4 may be wound or folded to form a battery structure 7. The formed battery structure 7 may be accommodated in a battery case 5. The lithium metal battery 1 may include an electrode tab 8 serving as an electrical path for inducing a current formed in the battery structure 7 to the outside. The battery case 5 may be filled with an organic electrolyte solution, and then sealed, thereby completing the manufacture of the lithium metal battery 1. The battery case 5 may be a square-type, but the shape of the battery case 5 is not limited thereto. For example, the battery case 5 may be a cylindrical-type, a thin-film type, or the like.

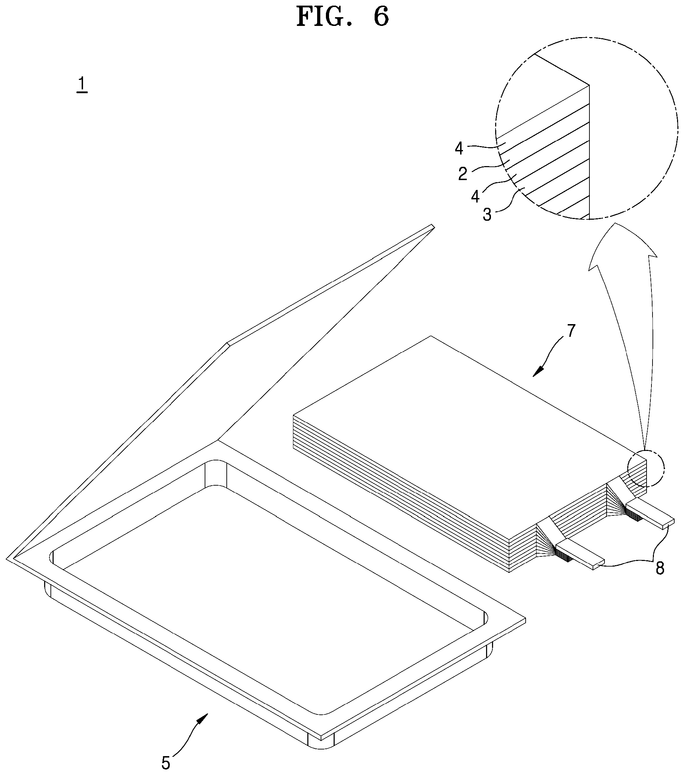

Referring to FIG. 6, a lithium metal battery 1 according to embodiments may include a cathode 3, an anode 2, and an electrolyte 4. The electrolyte 4 may be between the cathode 3 and the anode 2 to form a battery structure 7. A gel-type polymer electrolyte may be between the electrolyte and the cathode. The battery structure 7 may be stacked in a bi-cell structure, and then accommodated in the battery case 5. The lithium metal battery 1 may include an electrode tab 8 serving as an electrical path for inducing a current formed in the battery structure 7 to the outside. The battery case 5 may be filled with an organic electrolyte solution, and then sealed, thereby completing the manufacture of the lithium metal battery 1. The battery case 5 may be a square-type, but the shape of the battery case 5 is not limited thereto. For example, the battery case 5 may be a cylindrical-type, a thin-film type, or the like.

A pouch-type lithium metal battery corresponds to use of a pouch as a battery case for each of the lithium batteries of FIGS. 5 and 6. A pouch-type lithium metal battery may include one or more battery structures. The electrolyte 4 may be between the cathode 3 and the anode 2, or the electrolyte 4 and a separator may be between the cathode 3 and the anode 2, so as to form the battery structure 7. The battery structure 7 may be laminated as a bi-cell structure, impregnated with liquid electrolyte, and then accommodated and sealed in a pouch, thereby completing the manufacture of a pouch-type lithium metal battery. For example, in some embodiments, the cathode 3, anode 2, and the separator may be simply stacked in the form of an electrode assembly and then accommodated in a pouch, or may be wound or folded into a jelly roll-type electrode assembly and then accommodated in a pouch. Then, after injecting an organic electrolyte solution into the pouch, and the pouch may be sealed, thereby completing the manufacture of the lithium metal battery.

The lithium metal battery of embodiments of the present disclosure may have excellent discharge capacity and lifespan characteristics, and may also have high energy density, and thus may be, for example, used in an electric vehicle (EV). For example, the lithium metal battery may be used in a hybrid vehicle, such as a plug-in hybrid electric vehicle (PHEV) and/or the like. The lithium metal battery may also be applicable to the fields requiring high-power storage. For example, the lithium metal battery may be used in an electric bicycle, a power tool, and/or the like.

A plurality of units of the lithium metal battery may be stacked to form a battery module, and a plurality of units of such a battery module may form a battery pack. The battery pack may be used in a device that requires or utilizes high capacity and large output. For example, the battery pack may be used in a laptop computer, a smart phone, an electronic vehicle, and/or the like. The battery module may include, for example, a plurality of batteries and a frame that holds the plurality of batteries. The battery pack may include, for example, a plurality of battery modules and a bus bar that connects the battery modules together. The battery module and/or the battery pact may further include a cooling device. The plurality of battery packs may be managed by a battery management system. The battery management system may include a battery pack and an electronic control device connected to the battery pack.

### Method of preparing lithium metal battery

A method of preparing a lithium metal battery according to embodiments may include: preparing an anode current collector; forming a host structure on the anode current collector; preparing an electrolyte; preparing a cathode; and preparing an assembly by stacking the anode current collector, the host structure, the electrolyte, and the cathode.

The forming of the host structure on the anode current collector may include: forming a host layer on the anode current collector; electrojetting a composition including mesocarbon microbeads (MCMBs) and a first lithium-ion conducting polymer; and electrojetting a composition including MCMBs and a second lithium-ion conducting polymer, followed by drying.

The electrical conductivity of each of the first lithium-ion conducting polymer and the second lithium-ion conducting polymer may be 10⁻⁸ S/m or less, and the amount of the second lithium-ion conducting polymer may be greater than that of the first lithium-ion conducting polymer.

The electrojetting may include electrospinning and/or electrospraying.

Methods of electrojetting may be any suitable ones generally used in the art. The electrojetting may be a method of applying a high voltage to a solution to impart an electric charge and spraying the charged solution onto a substrate through a microscopic spray nozzle and/or a spray heat that generates droplets. The electrojetting may include electrospinning and/or electrospraying. According to KR 2009-0054385, use of an electrospinning device including a syringe (e.g., a syringe pump), a needle, a bottom electrode (e.g., a stainless steel drum capable of adjusting a rotation speed), and a device for supplying a spinning voltage is used, and a method of electrospinning by adjusting a distance between the tip of the needle and the drum to be in a range of about 5 cm to about 30 cm, a spinning voltage to be 15 kV or more, and a flow rate of a spinning solution to be in a range of about 1 ml/hr to about 20 ml/hr in the syringe pump is disclosed. KR 0271116 also discloses an electrospraying apparatus and an electrospraying method. These documents are also incorporated by reference herein in the present disclosure.

On a substrate of an electrojetting apparatus, an electrode may be on a current collector that is coated with the host layer composition, and the prepared composition for forming a first MCMB layer and the prepared composition for forming a second MCMB may be electrosprayed onto the outer surface of the current collector, thereby forming a first MCMB layer and a second MCMB layer, respectively. In some embodiments, the porosity of the coating layer may be improved by adjusting the spacing between injection needles, the transport speed of the substrate, and/or the like according to any suitable methods generally used in the art.

The forming of the host layer on the anode current collector may be performed by, for example, using a casting method.

The lithium metal battery may further include a separator. The separator may further include a liquid electrolyte and/or a gel-type polymer electrolyte.

Hereinafter, embodiments of the present disclosure will be described in more detail through Examples and Comparative Examples below. However, these examples are provided to represent embodiments of the present disclosure, and the scope of the present disclosure is not limited thereto.

### Preparation of anode and lithium metal battery

### Example 1: Anode current collector/host layer (MCMB layer)/first MCMB-containing layer (PAN+MCMB in weight ratio of 1:12/second MCMB-containing layer (PAN+MCMB in weight ratio of 1:7)

MCMBs (also known as mesophase spherical graphite particles) as an active material, SBR as a binder, and CMC as a binder were mixed together in a weight ratio of 95:3:2. The binder was prepared as a 1% by weight binder aqueous solution. The active material and 1 wt% binder aqueous solution were mixed together using a vortex mixer, and then uniformly dispersed by using a thinky mixer, so as to prepare a composition for forming an MCMB layer in a slurry state.

The MCMBs had a size of 16 um, a specific surface area of 2 m²/g, and a true density of 2.19 g/cm².

A 18 µm-thick-copper foil which is an anode current collector was coated with the composition for forming an MCMB layer, and then dried in a vacuum oven at 25 °C for one day, so as to form a structure in which an anode current collector and an MCMB-containing layer as a host layer (thickness: 30 µm) were provided.

A composition including MCMBs and PAN in weight ratio of 12:1 and a composition including MCMBs and PAN in weight ratio of 7:1 were applied sequentially on top of the structure by electrospinning, so as to form a first MCMB-containing layer including the MCMBs and the PAN in a weight ratio of 12:1 and a second MCMB-containing layer including the MCMBs and the PAN in a weight ratio of 7:1.

For a first electrospinning composition which is the composition for forming the first MCMB-containing layer, the PAN was dissolved in DMF and stirred at 40 °C for 12 hours, and the MCMBs were added thereto to have a weight ratio of the MCMBs and the PAN of 12:1.

Next, sonication was performed with a sonicator for 1 hour, and DMF was added to adjust the viscosity to enable the electrospinning of the first electrospinning composition, and then stirred at room temperature (25 °C) for 1 hour. The viscosity of the first electrospinning composition was about 1,000 cp, and the total amount of the DMF was 70 parts by weight based on 100 parts by weight of the total weight of the MCMBs and the PAN, and was 40 parts by weight based on 100 parts by weight of the DMF, the MCMBs, and the PAN.

A second electrospinning for forming the second MCMB-containing layer was prepared in the same manner as in the preparation of the first electrospinning composition, except that the MCMBs and the PAN were used in a weight ratio of 7:1.

A solution of the first electrospinning composition was transferred through a tube having an inner diameter of 0.5 mm at a flow rate of 0.4 ml/hr by using a syringe pump, and then electrospun on the MCMB layer by applying 19 kV, followed by drying at 25 °C for 12 hours to form the first MCMB-containing layer.

Subsequently, a solution of the second electrospinning composition was transferred through a tube having an inner diameter of 0.5 mm at a flow rate of 0.4 ml/hr by using a syringe pump, and then electrospun on the MCMB-containing layer by applying 19 kV, followed by drying at 25 °C for 12 hours to form the second MCMB-containing layer.

The thickness of the first MCMB-containing layer thus obtained was 30 µm, and the thickness of the second MCMB-containing layer was 30 µm.

The anode thus obtained was dried at room temperature (25 °C) for about a day.

A 20-µm-thick polyethylene single layer as a separator was stacked on the anode, and a lithium metal was stacked on the other surface of the separator to prepare a laminate. A liquid electrolyte was injected into the laminate thus prepared to prepare a half-cell type coin cell.

As a liquid electrolyte, a solution in which 1 M LiFSI was added to a mixed solvent containing bis(2,2,2-trifluoroethyl)ether (BTFE)/(dimethoxyethane (DME) in a weight ratio of 7:1 was used.

### Example 2: Anode current collector/MCMB layer/first MCMB-containing layer (PAN+MCMB in weight ratio of 1:10/second MCMB-containing layer (PAN+MCMB in weight ratio of 1:5)

A lithium metal battery including a host layer, a first MCMB-containing layer, and a second MCMB-containing layer was prepared in the same manner as in Example 1, except that the composition of each composition was changed so that the PAN and the MCMBs were included in a weight ratio of 1:10 in the first MCMB-containing layer and a weight ratio of 1:5 in the second MCMB-containing layer.

### Example 3: Anode current collector/host layer (MCMB layer)/first MCMB-containing layer (PEO+MCMB in weight ratio of 1:12/second MCMB-containing layer (PEO+MCMB in weight ratio of 1:7)

A lithium metal battery including a host layer, a first MCMB-containing layer, and a second MCMB-containing layer was prepared in the same manner as in Example 1, except that polyethylene oxide (PEO) was used instead of the PAN.

### Example 4

A lithium metal battery including a host layer, a first MCMB-containing layer, and a second MCMB-containing layer was prepared in the same manner as in Example 1, except that the thickness of the host layer was changed to 30 µm, the thickness of the first MCMB-containing layer was changed to 20 µm, and the thickness of the second MCMB-containing layer was changed to 10 µm.

### Example 5: Anode current collector/MCMB layer/first MCMB-containing layer PAN+MCMB in weight ratio of 1:11/second MCMB-containing layer (PAN+MCMB in weight ratio of 1:6

A lithium metal battery including a host layer, a first MCMB-containing layer, and a second MCMB-containing layer was prepared in the same manner as in Example 1, except that the composition of each composition was changed so that the PAN and the MCMBs were included in a weight ratio of 1:11 in the first MCMB-containing layer and a weight ratio of 1:6 in the second MCMB-containing layer.

### Comparative Example 1

An anode and a lithium metal battery were prepared in the same manner as in Example 1, except that a first MCMB-containing layer and a second MCMB-containing layer were not formed.

### Comparative Example 2

An anode and a lithium metal battery were prepared in the same manner as in Example 1, except that reduced graphene oxide (RGO) which is a plate-shaped carbon-based material was used in the formation of an MCMB layer, a first MCMB-containing layer, and a second MCMB-containing layer.

### Comparative Example 3

An anode and a lithium metal battery were prepared in the same manner as in Example 1, except that Al₂O₃ was used instead of the MCMB in the formation of a first MCMB-containing layer and a second MCMB-containing layer.

### Comparative Example 4

An anode and a lithium metal battery were prepared in the same manner as in Example 1, except that the mixing weight ratio of MCMBs and PAN was 7:1 in the formation of a first MCMB-containing layer and 12:1 in the formation of a second MCMB-containing layer.

According to Comparative Example 4, unlike the cases of Examples 1 to 5, the amount of the PAN in the first MCMB-containing layer was adjusted to be greater than that of the PAN in the second MCMB-containing layer.

### Evaluation Example 1: Scanning electron microscopy (SEM)

The charge/discharge characteristics for the lithium metal batteries of Example 1 and Comparative Example 1 were evaluated under the following conditions. A lithium electrodeposition pattern on the anode of each lithium metal battery was confirmed after charging.

Each lithium metal battery was charged with a constant current of 0.1 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.1 C rate until the voltage reached 3.6 V (vs. Li) during discharging (formation cycle).

Each lithium metal battery having undergone the formation cycle was charged with a constant current of 0.2 C rate at 25 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.5 C rate until the voltage reached 3.6 V (vs. Li) during discharging (1^{st} cycle). This cycle was repeated until the 9^{th} cycle under the same conditions.

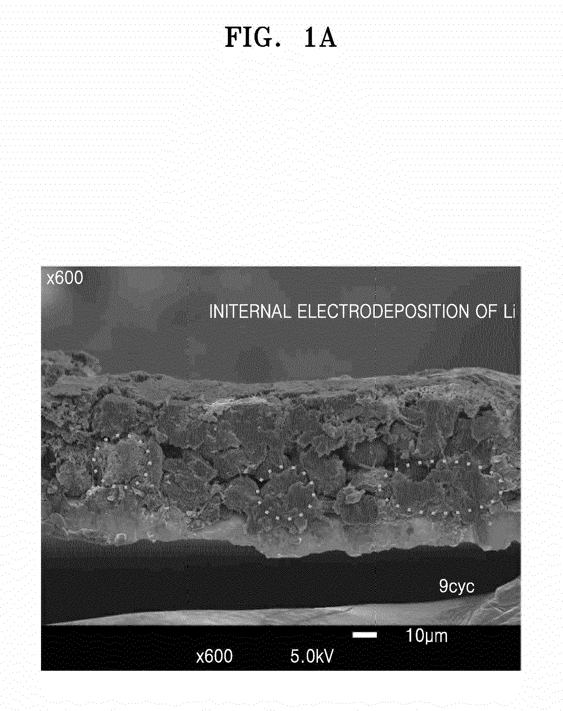

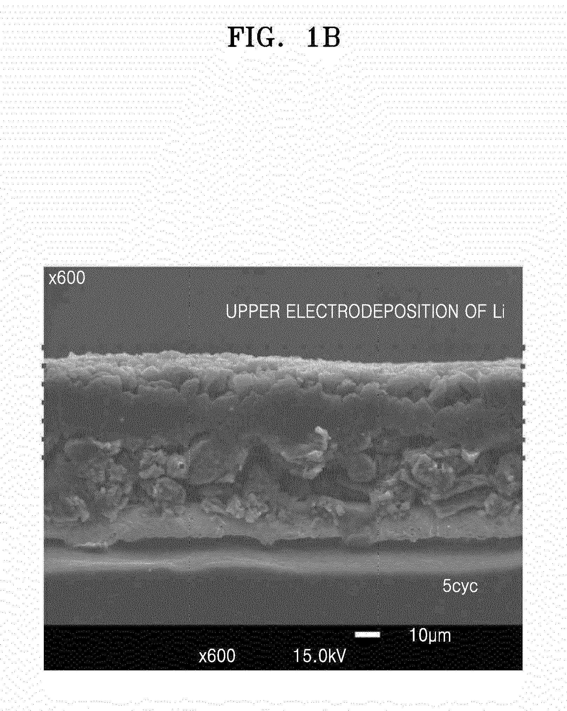

The lithium electrodeposition pattern after charging was confirmed, and images thereof obtained by a scanning electron microscope (SEM) were shown in FIGS. 1A and 1B. FIG. 1A shows an image of the lithium metal battery of Example 1, and FIG. 1B shows an image of the lithium metal battery of Comparative Example 1, and unlike the case of Example 1, the images were obtained after 5 cycles of charging and discharging.

As shown in FIGS. 1A and 1B, it can be seen that, even though the lithium metal battery of Example 1 underwent more cycles of charging and discharging than the lithium metal battery of Comparative Example 1, lithium was densely electrodeposited inside the host layer including lithium and the lithium and the degree of the lithium electrodeposition on top of the second MCMB-containing layer was significantly reduced in the lithium metal battery of Example 1.

In comparison, it can be seen that a lithium electrodeposition layer was formed on top of the MCMB layer in the lithium metal battery of Comparative Example 1.

### Evaluation Example 2: Charge/discharge characteristics

The voltage variation with the areal capacity of the lithium metal batteries of Example 1 and Comparative Example 1 was 54valuated under the following conditions. The ratio of lithium intercalation to lithium plating was adjusted to maintain 1:1.

Each lithium metal battery was charged with a constant current of 0.1 C rate at 25 °C until the voltage reached 10 mV (vs. Li), and was then cut-off at a current of 0.01 C rate while maintaining the voltage at 10 mV in a constant voltage mode. Subsequently, each lithium metal battery was discharged with a constant current of 0.1 C rate until the voltage reached 1 V (vs. Li) during discharging (formation cycle).

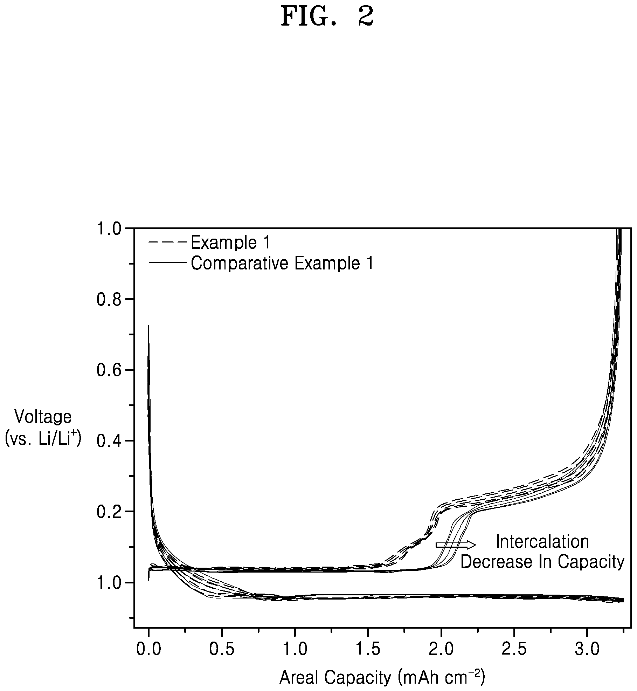

Each lithium metal battery having undergone the formation cycle was charged with a constant current of 0.5 C rate at 25 °C for 2 hours, and was then discharged with a constant current of 0.5 C rate until the voltage reached 1 V during discharging (1^{st} cycle). The evaluation results are shown in FIG. 2.

Referring to FIG. 2, it can be seen that the lithium metal battery of Comparative Example 1 had a small decrease in the intercalation capacity compared to the lithium metal battery of Example 1.

### Evaluation Example 3: Coulomb efficiency

The charge/discharge characteristics for the lithium metal batteries of Examples 1 to 5 and Comparative Examples 1 and 2 were evaluated under the following conditions. The ratio of lithium intercalation to lithium plating was adjusted to maintain 1:1.

Each lithium metal battery was charged with a constant current of 0.1 C rate at 25 °C until the voltage reached 10 mV (vs. Li), and was then cut-off at a current of 0.01 C rate while maintaining the voltage at 10 mV in a constant voltage mode. Subsequently, each lithium metal battery was discharged with a constant current of 0.1 C rate until the voltage reached 1 V (vs. Li) during discharging (formation cycle).

Each lithium metal battery having undergone the formation cycle was charged with a constant current of 0.5 C rate at 25 °C for 2 hours, and was then discharged with a constant current of 0.5 C rate until the voltage reached 1 V during discharging (1^{st} cycle). This cycle was repeated until the 65^{th} cycle under the same conditions.

In all charging and discharging cycles, a 10-minute stop time was provided after every one charging and discharging cycle. Some of the results of the charge/discharge test at room temperature are shown in Table 1 below. In each cycle, the Coulomb efficiency was defined by Equation 1 below, and the capacity retention rate was defined by Equation 2 below. At the 65^{th} cycle, it was marked with ∘ if the discharge capacity was maintained at 80% or more, and was marked with X if the discharge capacity was less than 80%, of the one-time discharge capacity. Coulomb efficiency [%] = [discharge capacity in 10 cycles / charge capacity in 10 cycles] × 100 Capacity retention rate (%)=(discharge capacity in 65 cycles / charge capacity in 1 cycle) × 100

**Table 1**

| | Coulomb efficiency (%) | Capacity retention rate |
|---|---|---|
| Example 1 | 99.43 | ○ |
| Example 2 | 99.38 | ○ |
| Example 3 | 99.35 | ○ |
| Example 4 | 99.40 | ○ |
| Example 5 | 99.28 | ○ |
| Comparative Example 1 | 97.20 | X |
| Comparative Example 2 | 96.87 | X |
| Comparative Example 3 | 96.23 | X |
| Comparative Example 4 | 95.53 | X |

As shown in Table 1, it can be seen that the lithium metal batteries of Examples 1 to 5 showed improved Coulomb efficiency and improved capacity retention rate characteristics, compared to the lithium metal batteries of Comparative Examples 1 to 4.

The lithium metal battery of Comparative Example 2 used RGO, which is a plate-shaped carbon-based material, instead of MCMBs in forming the MCMB layer, the first MCMB-containing layer, and the second MCMB-containing layer of the anode, resulting in high reactivity and poor resistivity characteristics compared to the MCMBs. In this regard, as shown in Table 1, the lithium metal battery of Comparative Example 2 showed a decrease in coulomb efficiency and capacity retention rates, compared to the lithium metal batteries of Examples 1 to 5.

Referring to Table 1, it can be seen that the lithium metal battery of Comparative Example 3 including the anode prepared by using Al₂O₃ instead of the MCMBs in forming the first MCMB-containing layer and the second MCMB-containing layer showed low Coulomb efficiency and low capacity retention rate characteristics compared to the lithium metal batteries of Examples 1 to 5. It can also be seen that the lithium metal battery of Comparative Example 4 including the anode, in which the amount of the PAN in the second MCMB layer was greater than that of the PAN in the first MCMB layer in forming the first MCMB-containing layer and second MCMB-containing layer, showed low Coulomb efficiency and low capacity retention rate characteristics compared to the lithium metal battery of Example 1.

### Evaluation Example 4: Porosity

The porosity of the anode, the host layer, the first MCMB-containing layer, and the second MCMB-containing layer in the lithium metal battery of Example 1 was analyzed by using an SEM, and the results are shown in Table 2. The volume occupied by the pores was examined by using an SEM, and then determined as porosity.

**Table 2**

| | | Porosity (%) |
|---|---|---|
| Example 1 | Anode | 60 |
| | Host layer | 55 |
| | First MCMB-containing layer | 58 |
| | Second MCMB-containing layer | 68 |

Referring to Table 2, it can be seen that the porosity increased in the order of the host layer, the first MCMB-containing layer, and the second MCMB-containing layer prepared according to Example 1.

According to the one or more embodiments, an anode, in which a volume change of a lithium metal and electrodeposition of lithium metal onto dendrites are controlled, and a lithium metal battery including the anode may be provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the present disclosure as defined by the following claims, and equivalents.

## Claims

1. An anode (20) for a lithium metal battery (1), comprising:
an anode current collector (21);
a host layer on the anode (20) current collector and comprising mesocarbon microbeads (MCMBs);
a first MCMB-containing layer comprising MCMBs and a first lithium-ion conducting polymer; and
a second MCMB-containing layer comprising MCMBs and a second lithium-ion conducting polymer, preferably in a range of about 5 parts by weight to about 30 parts by weight, based on 100 parts by weight of the total weight of the second MCMB-containing layer,
an electrical conductivity of each of the first lithium-ion conducting polymer and the second lithium-ion conducting polymer is 10⁻⁸ S/m or less, and an amount of the second lithium-ion conducting polymer is greater than that of the first lithium-ion conducting polymer, and the concentration of MCMBs in the second MCMB-containing layer is different from the concentration of MCMBs in the first MCMB-containing layer.

2. The anode (20) as claimed in claim 1, wherein the first lithium-ion conducting polymer and the second lithium-ion conducting polymer each have a lithium- substituting functional group.

3. The anode (20) as claimed in claim 1 or 2, wherein the first lithium-ion conducting polymer and the second lithium-ion conducting polymer are each polyethylene oxide, polyacrylonitrile, polymethylmethacrylate, a vinylidenefluoride-hexafluoropropylene copolymer, or a combination thereof.

4. The anode (20) as claimed in any of the claims 1 to 3, wherein the amount of the first lithium-ion conducting polymer is in a range of about 3 parts by weight to about 20 parts by weight, based on 100 parts by weight of the total weight of the first MCMB-containing layer.

5. The anode (20) as claimed in any of the claims 1 to 4, wherein:
the concentration of MCMBs in the first MCMB-containing layer is higher than the concentration of MCMBs in the second MCMB-containing layer, and/or
a thickness of the host layer to the first MCMB-containing layer is in a range of about 5:1 to about 1:1, and
a thickness of the host layer to the second MCMB-containing layer is in a range of about 5:1 to about 1:1;
and/or whereby
thickness of the host layer is in a range of about 10 µm to about 70 µm.

6. The anode (20) as claimed in any of the claims 1 to 5, wherein the MCMBs have a size in a range of about 1 um to about 50 um, a specific surface area in a range of about 0.2 m²/g to about 5 m²/g, and a true density of 2.10 g/cm³ or more.

7. The anode (20) as claimed in any of the claims 1 to 6, wherein:
a thickness of the first MCMB-containing layer is in a range of about 5 µm to about 30 µm, and
a thickness of the second MCMB-containing layer is in a range of about 5 µm to about 30 µm.

8. The anode (20) as claimed in any of the claims 1 to 7, wherein lithium metal is comprised in the host layer, between the host layer and the first MCMB-containing layer, in the second MCMB-containing layer, or a combination thereof; and/or wherein the host layer further comprises a binder.

9. The anode (20) as claimed in any of the claims 1 to 8, wherein an amount of the MCMBs in the host layer is in a range of about 85 parts by weight to about 97 parts by weight, based on 100 parts by weight of the total weight of the host layer.

10. The anode (20) as claimed in any of the claims 1 to 9, wherein the anode (20) has porosity in a range of about 50% to about 70%, the host layer has porosity in a range of about 50% to about 60%, the first MCMB-containing layer has porosity in a range of about 55% to about 65%, and the second MCMB-containing layer has porosity in a range of about 65% to about 75%.

11. The anode (20) as claimed in any of the claims 1 to 10, wherein the first lithium-ion conducting polymer and the second lithium-ion conducting polymer each have an average diameter in a range of about 0.001 nm to about 1,000 nm.

12. A lithium metal battery (1) comprising:
a cathode (10);
the anode (20) as claimed in any of the claims 1 to 11; and
an electrolyte (30) between the cathode (10) and the anode (20).

13. The lithium metal battery (1) as claimed in claim 12, wherein:
the electrolyte (30) comprises a liquid electrolyte, a solid electrolyte, a gel electrolyte, or a combination thereof,
the solid electrolyte comprises an oxide-based solid electrolyte, a sulfide-based solid electrolyte, a polymer solid electrolyte, or a combination thereof, and
the gel electrolyte comprises a polymer gel electrolyte; and/or
whereby the lithium metal battery (1) preferably comprises a separator.

14. The lithium metal battery (1) as claimed in claim 12 or 13, wherein:
the cathode (10) comprises a cathode current collector (11) and a cathode active material layer (12),
at least one selected from the cathode current collector (11) and the anode current collector (21) comprises a base film and a metal layer on one side or two opposing sides of the base film,
the base film comprises a polymer, wherein the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. A method of preparing an anode (20) for a lithium metal battery (1), the method comprising:
preparing an anode current collector (21);
forming a host layer on the anode current collector (21);
electrojetting, preferably comprising electrospinning or electrospraying, a composition comprising mesocarbon microbeads (MCMBs) and a first lithium-ion conducting polymer; and
electrospraying a composition comprising MCMBs and a second lithium-ion conducting polymer, followed by drying,
wherein an electric conductivity of each of the first lithium-ion conducting polymer and the second lithium-ion conducting polymer is 10⁻⁸ S/m or less, and
an amount of the second lithium-ion conducting polymer is adjusted to be greater than that of the first lithium-ion conducting polymer, to prepare the anode (20) as claimed in any of the claims 1 to 11.
